# FASCICULE DE BREVET EUROPEEN

(11) **EP 0 714 090 B1**
(45) Date de publication et mention de la délivrance du brevet: **19.03.2003**
(21) Numéro de dépôt: 95402615.9
(22) Date de dépôt: 21.11.1995
(51) Int. Cl.: G11B 5/31, G11B 5/49

(54) **Tête magnétique d'enregistrement/lecture et procédé de réalisation**
Aufzeichnungs/-wiedergabemagnetkopf und Herstellungsverfahren
Recording/reproduction magnetic head and production method

(30) Priorité: 25.11.1994 FR 9414146
(43) Date de publication de la demande: 29.05.1996
(73) Titulaire: Thales, 75008 Paris (FR)
(72) Inventeur: Lehureau, Jean-Claude, Thomson-CSF, F-92402 Courbevoie Cedex (FR)

(56) Documents cités:
- EP-A- 0 199 522
- WO-A-92/14250
- US-A- 3 382 325
- US-A- 3 395 401
- US-A- 3 789 158
- PATENT ABSTRACTS OF JAPAN vol. 9 no. 161 (P-370) [1884] ,5 Juillet 1985 & JP-A-60 038715 (FUJI SHASHIN FILM K. K.) 28 Février 1985,
- PATENT ABSTRACTS OF JAPAN vol. 7 no. 160 (P-210) [1305] ,14 Juillet 1983 & JP-A-58 068210 (HITACHI SEISAKUSHO K. K.) 23 Avril 1983,
- PATENT ABSTRACTS OF JAPAN vol. 11 no. 156 (P-578) [2603] ,21 Mai 1987 & JP-A-61 292216 (MATSUSHITA ELECTRIC IND CO LTD) 23 Décembre 1986,
- PATENT ABSTRACTS OF JAPAN vol. 12 no. 363 (P-764) ,29 Septembre 1988 & JP-A-63 113906 (MATSUSHITA ELECTRIC IND CO LTD) 18 Mai 1988,
- PATENT ABSTRACTS OF JAPAN vol. 11 no. 197 (P-589) ,25 Juin 1987 & JP-A-62 020114 (TOSHIBA SEIKI K. K.) 19 Juillet 1985,
- PATENT ABSTRACTS OF JAPAN vol. 7 no. 121 (P-199) [1266] ,25 Mai 1983 & JP-A-58 037831 (HITACHI SEISAKUSHO K. K.) 5 Mars 1983,
- PATENT ABSTRACTS OF JAPAN vol. 10 no. 195 (P-475) [2251] ,9 Juillet 1986 & JP-A-61 039914 (KONISHIROKU PHOTO IND CO LTD) 26 Février 1986,

## Description

L'invention concerne une tête magnétique d'enregistrement/ lecture et notamment une tête magnétique intégrée réalisée sous forme d'une tête matricielle dans laquelle les bobinages sont en couches minces.

Elle concerne également un procédé de réalisation d'une telle tête.

Une telle technique permet de réduire le pas des têtes et ainsi d'atteindre des densités d'enregistrement plus élevées.

Le Brevet français n° 2 605 783 décrit un procédé de têtes magnétiques en couches minces se prêtant bien à un procédé collectif de têtes matricielles.

La Demande de Brevet français n° 2 630 853 décrit une manière de réaliser les bobinages associés à une matrice de têtes magnétiques réalisée suivant le procédé du Brevet ci-dessus. Il a par ailleurs été décrit des procédés de réalisations de matrice de têtes bobinées en couches minces notamment dans le Brevet IBM MEE.

La demande de brevet JP 60-038715 décrit une tête magnétique en couches minces qui est placée sur le même substrat qu'un transformateur en couches minces.

La demande de brevet EPO 0 199 522 décrit une tête magnétique comportant un premier circuit magnétique et au moins un premier conducteur d'induction d'un flux magnétique passant dans ce circuit magnétique, ce conducteur étant en circuit bouclé sur un deuxième conducteur de commande qui passe à travers un deuxième circuit magnétique fermé possédant un premier enroulement d'induction d'un flux magnétique.

L'association d'une technologie planaire et d'une technologie de bobinages réalisés en couche mince se heurte à deux inconvénients :
- il est difficile de connecter les bobinages situés en face avant du composant puisque cette face est en regard avec le média ; on peut prendre les contacts qu'au travers du substrat, ce qui est technologiquement difficile;
- les circuits de commande électronique nécessitent un nombre minimum de spires dans le bobinage couche mince de manière à limiter le courant d'écriture ; ceci se traduit soit par une forte résistance électrique qui entraîne un échauffement du composant, soit par une surface de bobinage plus grande que ce que permet le pas désiré entre entrefers d'écriture.

Les têtes matricielles permettent non seulement un débit d'information élevé malgré des vitesses mécaniques modérées mais aussi des densités de pistes beaucoup plus étroites que ne le permettrait le repositionnement mécanique d'une tête individuelle sur une piste adjacente. A titre d'exemple, la précision de repositionnement par rapport à la bande magnétique de têtes individuelle est de l'ordre de 1 µm pour une tête rotative, 10 µm pour une tête fixe et 3 µm pour une tête asservie en position. Une tête matricielle ne semble pas permettre de meilleur positionnement par rapport à la bande, mais permet un positionnement relatif précis des pistes enregistrées simultanément.

Toutefois, l'enregistrement de pistes très étroites avec une tête matricielle soulève deux problèmes :
- le pas transverse des entrefers (perpendiculairement au sens de déplacement du support) doit bien sûr être égal au pas des pistes multiplié par le nombre de colonnes d'entrefers dans la matrice de têtes magnétiques de manière à réaliser un enregistrement compact ;
- l'extension longitudinale de la tête ne doit pas dépasser typiquement 300 fois la largeur de piste de manière à réaliser des paquets de pistes à pas constant malgré une erreur d'azimuth de défilement de la bande qui peut être de l'ordre de 0.5 mRd.

Ces considérations nous conduisent à ne pas dépasser un rapport de 16 entre le pas des entrefers et le pas des pistes ; ainsi une densité de 1000 TPI (3 µm de largeur de piste) nécessitera un pas d'entrefer de l'ordre de 40 µm.

L'invention propose une tête magnétique selon la revendication 1.
Les différents objets et caractéristiques de l'invention apparaîtront plus clairement dans la description qui va suivre et dans les figures annexées qui représentent :
- les figures 1a et 1b, un exemple de réalisation d'une tête magnétique de base selon l'invention ;
- les figures 2a et 2b, un exemple de réalisation d'un ensemble de têtes magnétiques ;
- les figures 3a et 3b, une plaque en matériau magnétique munie de bobinages d'excitation ;
- les figures 4a, 4b, une plaque de composite verre-ferrite servant de substrat au composant ;
- les figures 5 et 6, une géométrie de conducteurs en couche mince permettant l'adressage d'une matrice de têtes magnétiques ;
- les figures 7a et 7b, une tête magnétique située à un point de croisement d'une matrice de têtes ;
- la figure 8, deux réseaux de conducteurs superposés permettant de réaliser une commande matricielle ;
- les figures 9a et 9b, le substrat en matériau magnétique d'une matrice de têtes magnétiques ;,
- les figures 10a à 10e, certaines étapes d'un procédé de réalisation selon l'invention.

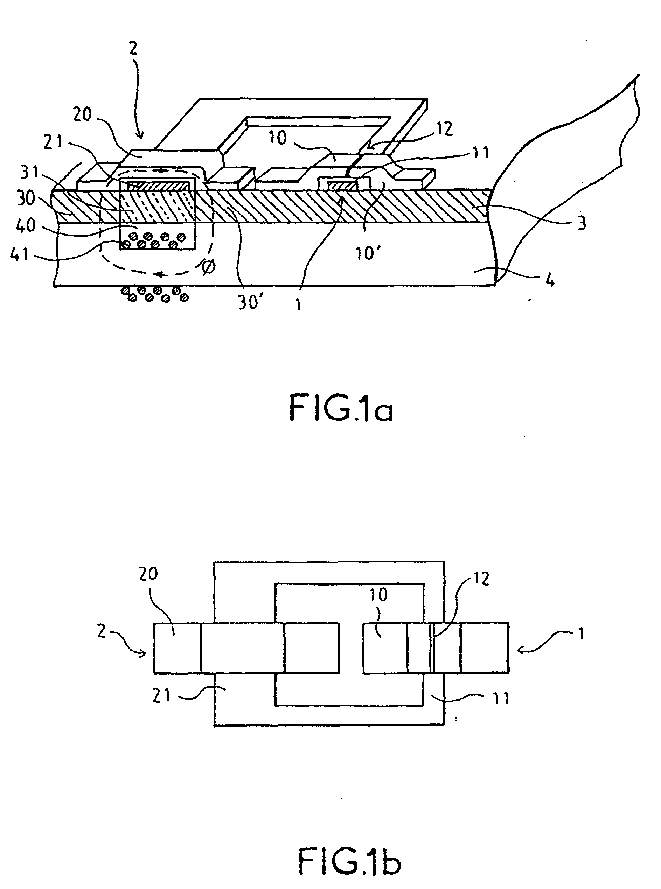

En se reportant aux figures 1a et 1b, on va tout d'abord décrire un exemple simplifié d'une tête magnétique d'enregistrement/lecture. La tête magnétique 1 proprement dite est représentée sur la partie droite des figures 1a, 1b. Elle comporte deux pôles magnétiques 10, 10' séparés par un entrefer 12. Le circuit magnétique de ces pôles est refermé par un substrat 3 en matériau magnétique. Un conducteur électrique 11 passe entre les pôles et le substrat pour induire un flux magnétique dans le circuit magnétique.

Sur la partie gauche des figures 1a, 1b, se trouve le circuit de commande la tête magnétique. Il comporte un conducteur 21 connecté au conducteur 11 de la tête magnétique. Comme cela est représenté en figure 1b, les conducteurs 21 et 11 constituent une boucle fermée. Le conducteur 21 est réalisé sur le substrat 3. Un élément en matériau magnétique 20 recouvre partiellement le conducteur 21. Celui-ci est localisé sur une portion 31 du substrat qui est en matériau non magnétique sous le conducteur 21. L'élément 20 couple magnétiquement les deux parties du substrat 30 et 30' en matériau magnétique situées de part et d'autre de la portion 31.

Au substrat 3 est accolée une plaque 4 comportant une rainure 40 et par laquelle est bobiné un fil conducteur 41 autour de la plaque 4.

Le bobinage 41 est destiné à être alimenté par un courant de commande. Le courant induit alors un flux magnétique φ dans le circuit magnétique constitué par la plaque 4, les parties 30 et 30' du substrat 3, l'élément magnétique 20. De ce fait, le conducteur 21 est le siège d'un courant induit. Ce courant circule dans le conducteur 12 qui induit un flux magnétique dans la tête magnétique 1.

Une telle tête magnétique présente l'avantage de n'avoir qu'un seul conducteur d'excitation 11 sous ses pôles magnétiques 10, 10'. Ceci permet une réalisation facile même lorsque le pas des têtes est très fin. Le conducteur 21 et le bobinage 41 constituent un transformateur. En prévoyant un nombre suffisant de spires pour le bobinage 41, on peut à partir d'un courant relativement faible d'alimentation du bobinage obtenir un courant élevé dans le conducteur 21 et donc dans le conducteur 11. On peut envisager de commander le bobinage 41 à l'aide d'un circuit électronique sans prévoir des puissances excessives.

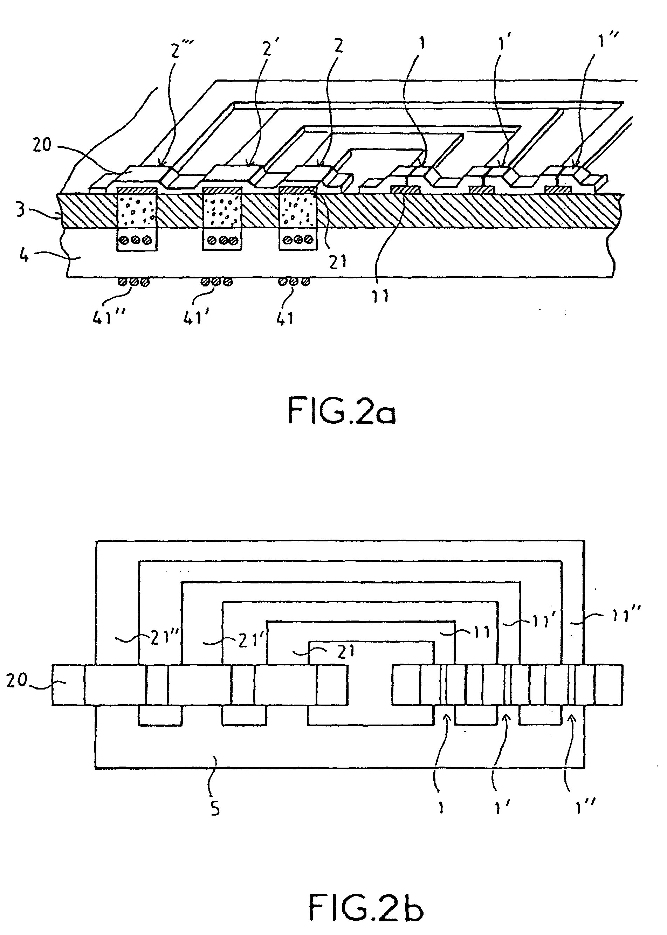

Les figures 2a et 2b représentent un ensemble de têtes magnétiques 1, 1', 1" et de leurs circuits de commande 2, 2', 2". Chaque tête magnétique et son circuit de commande est réalisé de la même façon qu'en figures 1a et 1b. Les particularités de cet exemple de réalisation sont que le substrat magnétique 3 peut être commun pour les trois têtes magnétiques, que l'élément magnétique 20 peut être en une seule pièce pour les trois circuits de commande, et que les conducteurs 11, 11', 11" sont connectés par un conducteur commun 5 aux conducteurs 21, 21', 21".

Le bobinage 41 commande la tête magnétique 1, le bobinage 41' commande la tête magnétique 1', et le bobinage 41" commande la tête magnétique 1".

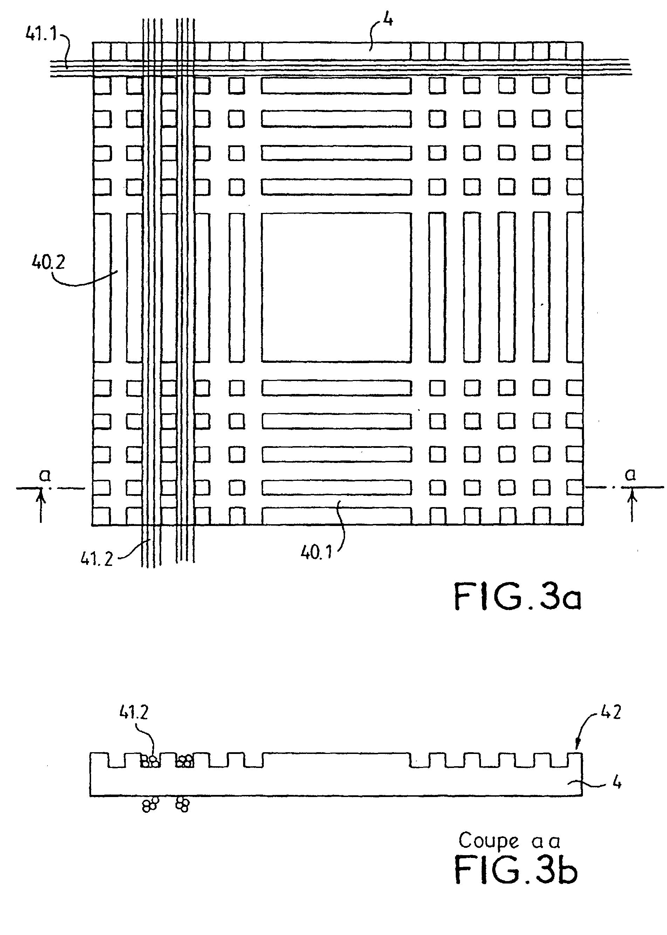

En se reportant aux figures 3a à 9b on va décrire un exemple de réalisation des têtes magnétiques selon l'invention réalisées sous une forme matricielle.

Les figures 3a et 3b représentent une plaque 4 en matériau magnétique qui comporte dans sa face 42, des rainures horizontales 40.1 et des rainures verticales 40.2. Un bobinage passe dans chaque rainure et entoure la plaque en passant par la face opposée à la face 42. On a ainsi représenté un bobinage horizontal 41.1 et deux bobinages verticaux tels que 41.2.

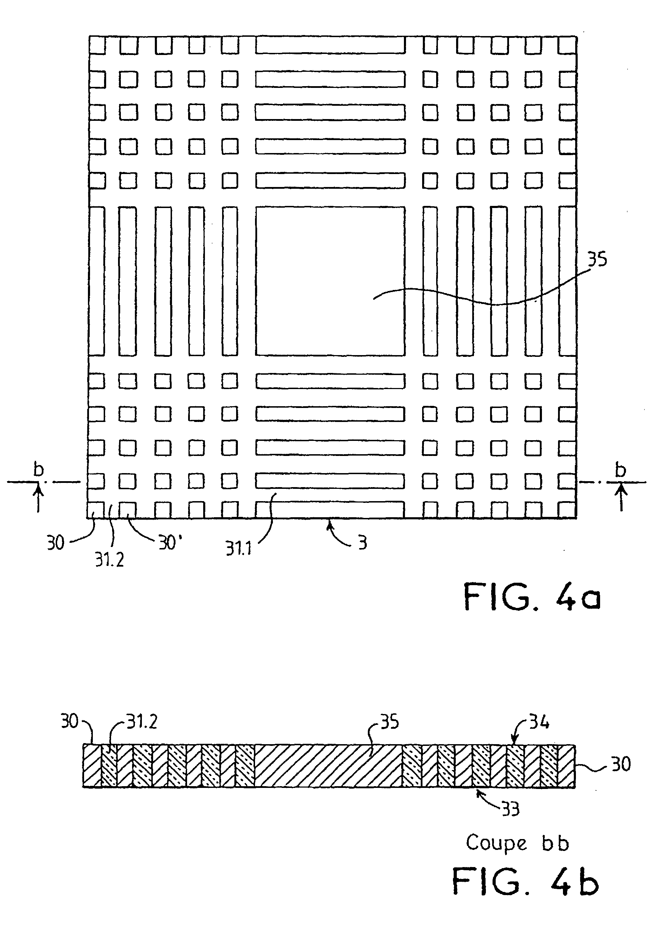

Sur la face 42 de la plaque 4 est accolée une plaque de substrat 3 telle que représentée en figures 4a et 4b. Cette plaque est constituée de bandes horizontales telles que 31.1 et de bandes verticales telles que 31.2 en matériau non magnétique (du verre par exemple). Ces bandes correspondent aux rainures de la plaque 4. Entre les bandes horizontales et verticales se trouve du matériau magnétique tel que 30 et 30'. La partie centrale 35 de la plaque de substrat 3 comporte une surface carrée en matériau magnétique. La plaque 3 est accolée par sa face 33 à la face 42 de la plaque 4.

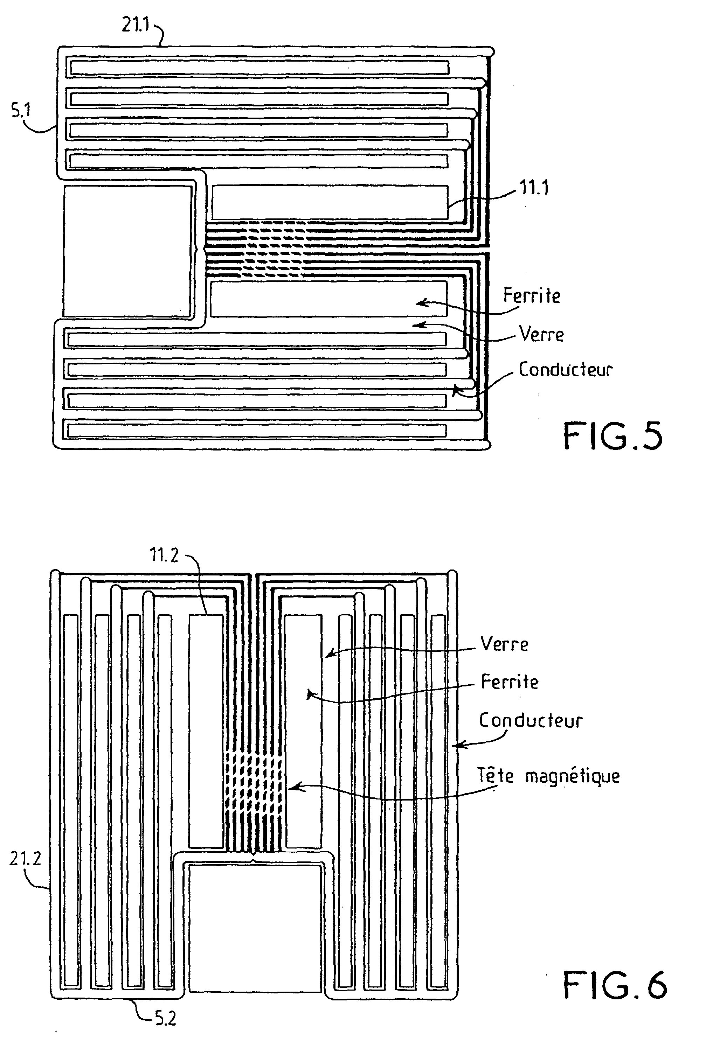

Sur la face 34 est réalisé un réseau de conducteurs 21.1. Un conducteur horizontal 21.1 est réalisé au-dessus de chaque bande en matériau non magnétique 31.1 tel que cela est représenté en figure 5. A la partie supérieure de la face 34 on prévoit par exemple quatre conducteurs et à la partie intérieure quatre conducteurs.

Huit conducteurs parallèles 11.1 sont alors prévus avec chacun une extrémité connectée à un conducteur 21.1. Les autres extrémités des conducteurs 21.1 sont connectées par le conducteur 5.1 aux extrémités libres des conducteurs 11.1.

L'ensemble est recouvert d'une couche de matériau isolant. Un réseau de conducteurs verticaux 21.2 et 11.2 est réalisé au-dessus de l'isolant (voir figure 6). Ce réseau est similaire à celui de la figure 5 mais est orienté à 90° des conducteurs 21.1 et 11.1. Les conducteurs 21.2 sont situés au-dessus des bandes verticales non magnétiques 31.2. L'ensemble est à nouveau recouvert d'une couche isolante. Les conducteurs 11.1 et 11.2 constituent les conducteurs de commande d'une matrice de têtes magnétiques.

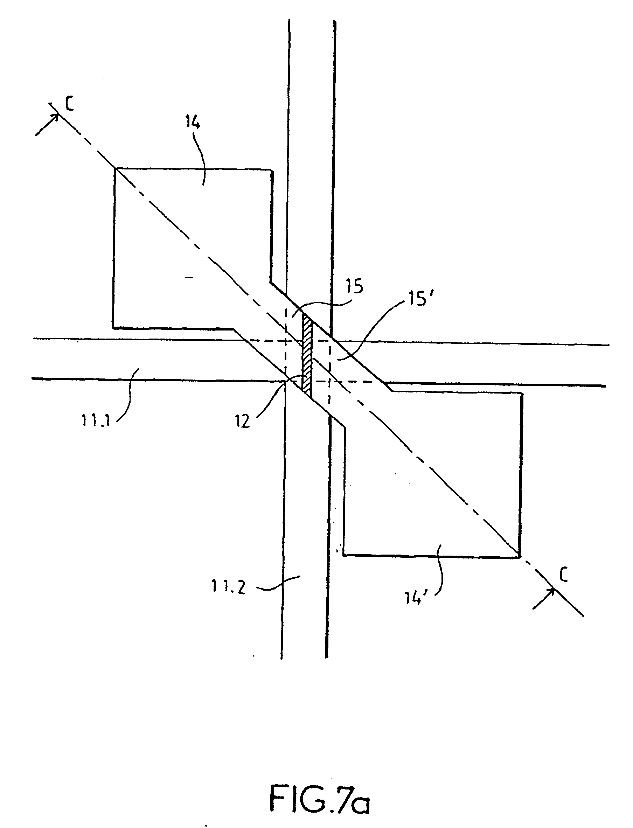

En effet, au-dessus de chaque point de croisement des conducteurs 11.1 et 11.2 sont réalisés des têtes magnétiques. Chaque tête magnétique comporte deux pôles magnétiques 10 et 10' réalisés de préférence en couche mince à l'aide d'un matériau à très bonne perméabilité magnétique (du sendust par exemple, à savoir un alliage d'aluminium, de fer et d'étain). Les deux pôles magnétiques sont séparés par un entrefer 12. Ils ont par exemple une géométrie telle que représentée en figure 7a avec chacun une partie 14, 14' de surface relativement grande. Les deux parties 14, 14' sont situées en diagonale du point de croisement. Deux éléments étroits 15, 15' interrompus par l'entrefer 12 joignent les parties 14, 14'.

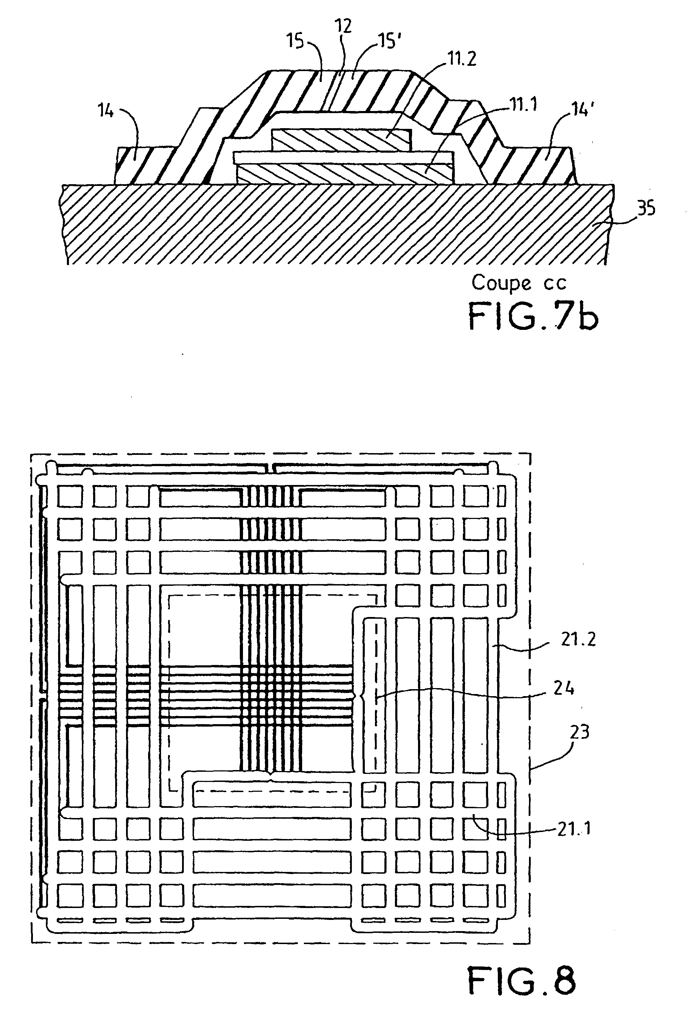

De préférence, comme cela est représenté par la coupe cc de la figure 7b, les parties de pôles magnétiques 14 et 14' sont en contact direct avec la zone 35 en matériau magnétique du substrat 3. Pour cela, les couches d'isolant déposées sur les conducteurs 11.1 et 11.2 ont été gravées à l'emplacement de ces parties 14 et 14'.

Enfin, les conducteurs 21.1 et 21.2 sont recouverts d'une couche magnétique 20 pour refermer le circuit magnétique au-dessus de chaque conducteur de façon similaire à ce qui a été représenté en figure 1a. Sur la figure 8, on a représenté les réseaux de conducteurs superposés 21.1 et 21.2. La couche magnétique 20 est délimitée par les pointillés 23 et 24 et se trouve entre ces pointillés au-dessus des conducteurs 21. 1 et 21.2.

Ainsi selon l'invention, la réalisation des conducteurs en couche mince de la tête magnétique s'avère technologiquement beaucoup plus simple que celle d'un bobinage multispire.

Il n'est pas nécessaire d'assurer le retour de l'extrémité intérieure du fil par une autre couche mince, séparée par une couche d'isolation dans laquelle ont été gravées des épargnes permettant la reprise de contact.

L'absence de fil de retour en couche mince permet de gagner un facteur 2 sur la résistance et donc la dissipation thermique.

La règle de fabrication est moins contraignante et permet la gravure de couches plus épaisses donc moins résistives.

L'invention permet ainsi de faire passer un signal de commande en face avant du composant et de réaliser les fonctions de transformateur nécessaire à l'usage d'un bobinage couche mince monospire.

Le substrat présenté en figures 4a, 4b est réalisé par sciage d'un bloc de ferrite, remplissage de verre et amincissement par polissage ; il diffère de la structure antérieure en ce que le passage des flux se fait par la partie périphérique ; la partie centrale sur laquelle sont déposés les têtes magnétiques est un monolithe de ferrite. De plus, les flux transférés en face avant ne sont plus les I x c flux correspondants à chaque croisement de bobinage et l'entrefer correspondant, mais seulement les I + c flux correspondants aux I bobinages horizontaux et c bobinages verticaux.

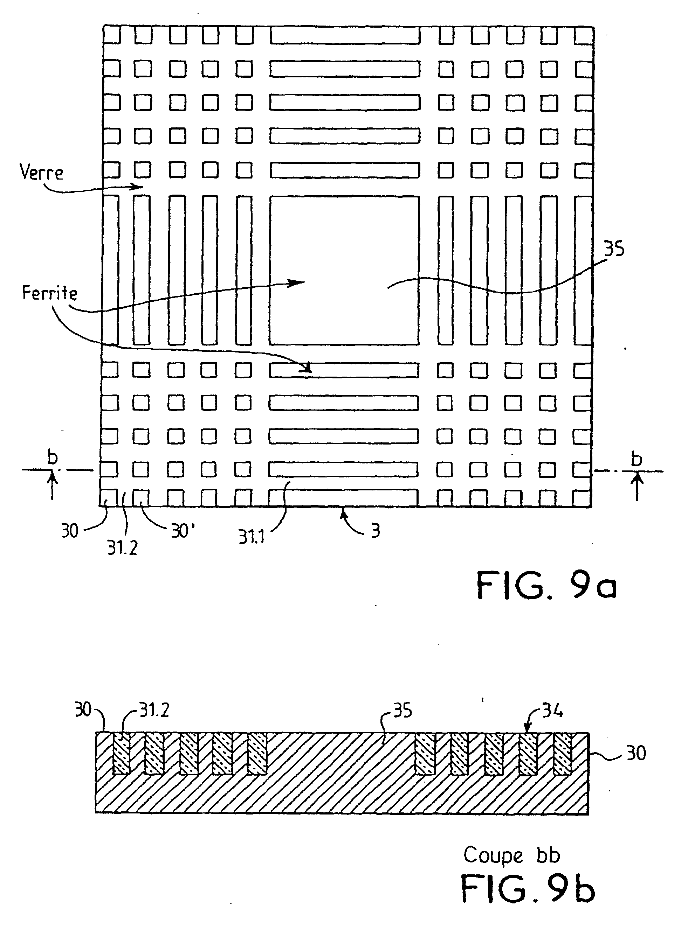

Le matriçage de ces I + c flux se fait par les couches conductrices représentées en figure 9 : la variation de flux encerclant chacun des montants périphériques des éléments de circuit génère dans ceux-ci des potentiels induisant un courant qui circule dans la partie centrale.

Comme on l'a vu, la figure 1a représente les éléments dans lequel circule ce flux : le bloc de ferrite 4 rainuré et bobiné en face arrière, le composite verre-ferrite 3 servant de substrat, une couche mince de matériau magnétique 20 recouvrant la spire couche mince 21 en face avant. Cette couche 20 est préférentiellement déposée en même temps que les couches 10, 10' composant la tête magnétique. Le flux qui peut être induit dans le circuit est limité par la saturation de cette couche mince (de l'ordre de 1 Tesla); sur 5 mm de rainure et 4 µm de couche, un flux de 20 nWb peut être induit. La variation de ce flux à 15 MHz induit une tension de 2 Volts dans le circuit couche mince. Si la résistance de la spire est inférieure à 10 Ohms, un courant suffisant pour l'écriture peut être induit ; ceci correspond typiquement à une couche de résistance carrée 0.1 Ohm ; c'est-à-dire une fraction de micron d'un bon conducteur tel que le cuivre, l'or ou l'aluminium.

La structure de la tête magnétique diffère faiblement de la structure du Brevet 2 605 783. Pour des pas de têtes magnétiques modérés, il n'est pas indispensable de creuser les couches isolantes (comme en figure 8) ayant servi à la séparation des circuits conducteurs. Pour des pas très fins (quelques dizaines de microns), il est préférable de le faire comme le montre la figure 8 de manière à bien refermer le circuit magnétique.

La réalisation d'une tête magnétique matricielle ainsi décrite pourra être réalisée dans le procédé suivant.

On réalise dans une plaque 4 en matériau magnétique des rainures orthogonales 40.1 et 40.2. Dans chaque rainure on réalise un bobinage d'excitation 41.1, 41.2 qui passe dans la rainure et sur la face opposée aux rainures (figures 3a, 3b).

Par ailleurs, on réalise dans une plaque de substrat en matériau magnétique 3 des rainures que l'on remplit d'un matériau non magnétique 31.1, 31.2 (voir figures 9a, 9b). La face opposée aux rainures est usinée pour obtenir la face 33 de la figure 4b. Cet usinage peut être fait dès maintenant ou ultérieurement.

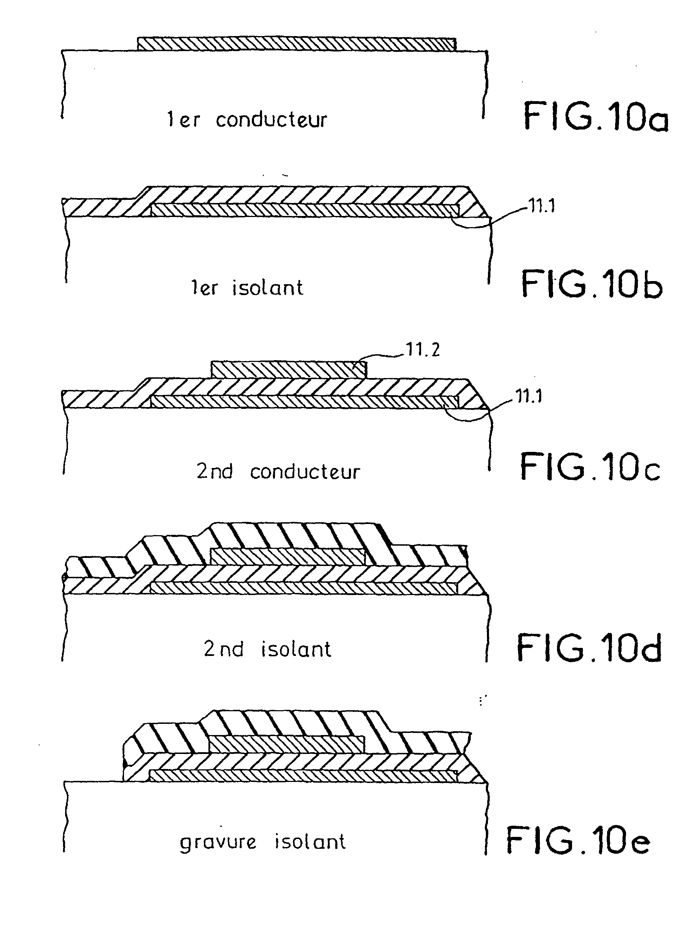

On réalise sur les bandes horizontales 31.1 de matériau non magnétique, les conducteurs horizontaux de commande 21.1 ainsi que les conducteurs d'induction 11.1 tel que cela est représenté en figure 5. La figure 10a représente en coupe un conducteur d'induction 11. 1 par exemple.

Comme représenté en figure 10b, on recouvre l'ensemble d'une couche d'isolant. Notamment au-dessus de la zone 35 où doivent se croiser les conducteurs d'induction 11.1 et 11.2.

On réalise ensuite les conducteurs verticaux de commande 21.2 ainsi que les conducteurs verticaux d'induction 11.2 tel que cela est représenté en figure 6. La figure 10c représente en coupe un point de croisement entre un conducteur d'induction horizontal 11.1 et un conducteur d'induction vertical 11.2.

L'ensemble est à nouveau recouvert d'une couche isolante (figure 10d). On grave ensuite (figure 10e) les deux couches d'isolant déposées précédemment en diagonale de part et d'autre de chaque point de croisement pour accéder à la zone centrale 35 en matériau magnétique du substrat 3.

On réalise ensuite les différentes têtes magnétiques telles que celles représentées en figure 8 selon par exemple la technique décrite dans la Demande de Brevet n° 2 605 783. Dans la même opération, on peut recouvrir les conducteurs de commande 21.1 et 21.2 par une couche en matériau magnétique.

Enfin la plaque 4 bobinée précédemment est accolée par sa face 42 à la face 33 de la plaque du substrat 3 opposée à celle portant les têtes magnétiques et les conducteurs de telle façon à avoir continuité dans les circuits magnétiques de commande et que les bobinages soient sensiblement au-dessous des bandes de matériau non magnétique 31.2 de la plaque de substrat 3.

## Revendications

1. Tête magnétique d'enregistrement/lecture comportant un premier circuit magnétique (1) et au moins un premier conducteur d'induction (11) d'un flux magnétique passant dans ce circuit magnétique, ce conducteur étant en circuit bouclé sur un deuxième conducteur de commande (21) qui passe à travers un deuxième circuit magnétique fermé (2) possédant un premier enroulement (41) d'induction d'un flux magnétique alimenté par un courant impulsionnel ou alternatif, le premier conducteur d'induction (11) étant situé sur une première face (34) d'un substrat (3) en matériau magnétique, une plaque (4) en matériau magnétique étant accolée à une deuxième face du substrat (3) opposée à la première face (34), **caractérisée en ce que** le premier enroulement d'induction (41) est bobiné autour de la plaque (4) de telle sorte qu'il est situé entièrement à l'opposé du premier conducteur d'induction (11) par rapport au substrat (3).

2. Tête magnétique selon la revendication 1, **caractérisée en ce qu'**elle ne comporte qu'un seul premier conducteur d'induction (11) et que l'enroulement d'induction (41) comporte plusieurs spires.

3. Tête magnétique selon la revendication 1, **caractérisée en ce que**, dans la zone de prolongement de ce conducteur, le substrat est non magnétique (31) sous le conducteur (21) ;
- le premier conducteur d'induction (11) est recouvert par une première couche (10, 11) de matériau à bonne perméabilité magnétique interrompue par un entrefer (12) et réalisant la tête magnétique;
- le conducteur de commande (21) est recouvert par une deuxième couche (20) de matériau à bonne perméabilité magnétique.

4. Tête magnétique selon la revendication 3, **caractérisée en ce que** la première couche (10, 10') et la deuxième couche (20) de matériau à bonne perméabilité magnétique sont une même couche de matériau.

5. Tête magnétique selon la revendication 3, **caractérisée en ce qu'**elle comporte
- un deuxième conducteur d'induction( 11.2) perpendiculaire au premier conducteur d'induction (11.1) et définissant un point de croisement, les deux conducteurs d'induction passant à ce point de croisement, dans le premier circuit magnétique (1) d'une tête magnétique ;
- un deuxième conducteur de commande (21.2) bouclé sur le deuxième conducteur d'induction ; au deuxième conducteur de commande (21.2).

6. Tête magnétique selon la revendication 3, **caractérisée en ce qu'**elle comporte
- plusieurs premiers conducteurs d'induction (11) parallèles entre eux associés chacun à des premiers circuits magnétiques (1) d'une tête magnétique élémentaire ;
- plusieurs deuxièmes conducteurs de commande (21) parallèles entre eux chacun étant bouclé sur un premier conducteur d'induction ;
- plusieurs enroulements d'induction (41) chacun d'eux étant associé magnétiquement à un premier conducteur de commande (21).

7. Tête magnétique selon l'une des revendication 5 ou 6, **caractérisée en ce qu'**elle comporte :
- plusieurs deuxièmes conducteurs d'induction (11.2) parallèles entre eux et perpendiculaires aux premiers conducteurs d'induction (11.1) chaque croisement d'un premier conducteur d'induction et d'un deuxième conducteur d'induction définissant un point de croisement à l'endroit duquel chaque conducteur passe dans un circuit magnétique définissant une tête magnétique élémentaire, les premiers et deuxièmes conducteurs d'induction étant isolés les uns des autres ;
- plusieurs deuxièmes conducteurs de commande (21.2) bouclés chacun sur un deuxième conducteur d'induction ;
- plusieurs deuxièmes enroulements d'induction (41.2) associés chacun à un deuxième conducteur de commande (21.2).

8. Tête magnétique selon la revendication 7, **caractérisée en ce que** les deuxièmes conducteurs de commande (21.2) sont perpendiculaires aux premiers conducteurs de commande (21.1).

9. Tête magnétique selon la revendication 8, **caractérisée en ce que** les premiers et deuxièmes conducteurs d'induction (11.1, 11.2) se croisent dans une zone (35) de forme parallélépipédique et que les conducteurs de commande sont situés à l'extérieur de cette zone, les premiers conducteurs de commande étant parallèles à un premier côté de la forme parallélépipédique et les deuxièmes conducteurs de commande étant parallèles à un deuxième côté de la forme parallélépipédique non parallèle au premier côté.

10. Tête magnétique selon la revendication 9, **caractérisée en ce que** les premiers conducteurs de commande sont répartis de chaque côté de la zone (35) et que les deuxièmes conducteurs sont répartis de chaque côté de la zone (35).

## Patentansprüche

1. Magnetkopf zum Aufzeichnen/Lesen mit einem ersten Magnetkreis (1) und wenigstens einem ersten Induktionsleiter (11) eines in dem Magnetkreis fließenden Magnetflusses, wobei dieser Leiter eine Schleifenschaltung mit einem zweiten Steuerleiter (21) bildet, der durch einen zweiten geschlossenen Magnetkreis (2) verläuft, der eine erste Induktionsspule (41) eines Magnetflusses aufweist, die durch einen Impuls- oder Wechselstrom gespeist wird, wobei der erste Induktionsleiter (11) auf einer ersten Fläche (34) eines Substrats (3) aus magnetischem Material liegt, und wobei eine Platte (4) aus magnetischem Material mit einer zweiten, der ersten Fläche (34) gegenüberliegenden Substratfläche (3) verbunden ist,
**dadurch gekennzeichnet, dass**
die erste Induktionsspule (41) derart um die Platte (4) herumgewickelt ist, dass sie vollständig gegenüber dem ersten Induktionsleiter (11) relativ zu dem Substrat (3) liegt.

2. Magnetkopf nach Anspruch 1, **dadurch gekennzeichnet, dass** der Kopf nur einen einzigen ersten Induktionsleiter (11) enthält und dass die Induktionsspule (41) mehrere Windungen enthält.

3. Magnetkopf nach Anspruch 1, **dadurch gekennzeichnet, dass** in dem Bereich der Verlängerung des Leiters das Substrat unter dem Leiter (21) nichtmagnetisch (31) ist,
- der erste Induktionsleiter (11) durch eine erste Schicht (10, 11) aus einem Material mit einer guten magnetischen Permeabilität bedeckt ist, die durch einen Luftspalt (12) unterbrochen ist und den Magnetkopf bildet,
- der Steuerleiter (21) durch eine zweite Schicht (20) aus einem Material mit einer guten magnetischen Permeabilität bedeckt ist.

4. Magnetkopf nach Anspruch 3, **dadurch gekennzeichnet, dass** die erste Schicht (10, 10') und die zweite Schicht (20) aus Material mit einer guten magnetischen Permeabilität eine Schicht aus demselben Material sind.

5. Magnetkopf nach Anspruch 3, **dadurch gekennzeichnet, dass** er folgendes enthält:
- einen zweiten Induktionsleiter (11.2), der senkrecht zu dem ersten Induktionsleiter (11.1) verläuft und einen Kreuzungspunkt bildet, dass die beiden Induktionsleiter in dem ersten Magnetkreis (1) eines Magnetkopfes durch diesen Kreuzungspunkt verlaufen,
- einen zweiten Steuerleiter (21.2), der mit dem zweiten Induktionsleiter gekoppelt ist, einen zweiten Steuerleiter (21.2).

6. Magnetkopf nach Anspruch 3, **gekennzeichnet durch** folgende Merkmale:
- mehrere, zueinander parallele erste Induktionsleiter (11), jeder für erste magnetische Kreise (1) eines elementaren Magnetkopfes,
- mehrere, zueinander parallele zweite Steuerleiter (21), die mit einem ersten Induktionsleiter gekoppelt sind,
- mehrere Induktionsspulen (41), von denen jede magnetisch zu einem ersten Steuerleiter (21) gehört.

7. Magnetkopf nach einem der Ansprüche 5 oder 6, **gekennzeichnet durch** folgende Merkmale:
- mehrere zweite Induktionsleiter (11.2), die parallel zueinander und senkrecht zu den ersten Induktionsleitern (11.1) liegen, wobei jeder Kreuzungspunkt eines ersten Induktionsleiters und eines zweiten Induktionsleiters einen Kreuzungspunkt bildet, von dem jeder Leiter in einem Magnetkreis verläuft, der einen elementaren Magnetkopf bildet, wobei der erste und der zweite Induktionsleiter voneinander isoliert sind,
- mehrere zweite Steuerleiter (21.2), von denen jeder mit einem zweiten Induktionsleiter gekoppelt ist,
- mehrere zweite Induktionspulen (41.2), von denen jede zu einem zweiten Steuerleiter (21.2) gehört.

8. Magnetkopf nach Anspruch 7, **dadurch gekennzeichnet, dass** die zweiten Steuerleiter (21.2) senkrecht zu den ersten Steuerleitern (21.1) liegen.

9. Magnetkopf nach Anspruch 8, **dadurch gekennzeichnet, dass** der erste und der zweite Induktionsleiter (11.1, 11.2) einander in einem Bereich (35) mit einer parallelepipedischen Form kreuzen und dass die Steuerleiter außerhalb dieses Bereichs liegen, dass die ersten Steuerleiter parallel zu einer ersten Seite der parallelepipedischen Form und die zweiten Steuerleiter parallel zu einer zweiten Seite der parallelepipedischen Form liegen, die nicht parallel zu der ersten Seite liegt.

10. Magnetkopf nach Anspruch 9, **dadurch gekennzeichnet, dass** die ersten Steuerleiter über jede Seite des Bereichs (35) verteilt sind und die zweiten Steuerleiter über jede Seite des Bereichs (35) verteilt sind.

## Claims

1. Magnetic recording/reproduction head comprising a first magnetic circuit (1) and at least a first conductor (11) for inducing a magnetic flux passing through this magnetic circuit, this conductor being in a circuit looped over a second control conductor (21) which passes through a second closed magnetic circuit (2) having a first winding (41) for inducing a magnetic flux supplied by a pulsed or a.c. current, the first induction conductor (11) being located on a first face (34) of a substrate (3) made of a magnetic material, a plate (4) made of a magnetic material being fastened to a second face of the substrate (3) opposite the first face (34), **characterized in that** the first induction winding (41) is coiled around the plate (4) such that it is located completely away from the first induction conductor (11) with respect to the substrate (3).

2. Magnetic head according to Claim 1, **characterized in that** it comprises only a single first induction conductor (11) and that the induction winding (41) comprises several turns.

3. Magnetic head according to Claim 1, **characterized in that**, in the extension region of this conductor, the substrate (31) is non-magnetic under the conductor (21);
- the first induction conductor (11) is covered by a first layer (10, 11) of material having good magnetic permeability broken by a gap (12) and producing the magnetic head;
- the control conductor (21) is covered by a second layer (20) of material having good magnetic permeability.

4. Magnetic head according to Claim 3, **characterized in that** the first layer (10, 10') and the second layer (20) of material having good magnetic permeability are the same layer of material.

5. Magnetic head according to Claim 3, **characterized in that** it comprises
- a second induction conductor (11.2) perpendicular to the first induction conductor (11.1) and defining a point of intersection, the two induction conductors passing, at this point of intersection, into the first magnetic circuit (1) of a magnetic head;
- a second control conductor (21.2) looped over the second induction conductor; at the second control conductor (21.2).

6. Magnetic head according to Claim 3, **characterized in that** it comprises:
- several first mutually parallel induction conductors (11), each one associated with first magnetic circuits (1) of an elementary magnetic head;
- several second mutually parallel control conductors (21), each one being looped over a first induction conductor;
- several induction windings (41), each of them being magnetically associated with a first control conductor (21).

7. Magnetic head according to either of Claims 5 or 6, **characterized in that** it comprises:
- several second mutually parallel induction conductors (11.2) perpendicular to the first induction conductors (11.1), each intersection of a first induction conductor with a second induction conductor defining a point of intersection at the location of which each conductor passes into a magnetic circuit defining an elementary magnetic head, the first and second induction conductors being insulated from each other;
- several second control conductors (21.2), each one looped over a second induction conductor;
- several second induction windings (41.2), each one associated with a second control conductor (21.2).

8. Magnetic head according to Claim 7, **characterized in that** the second control conductors (21.2) are perpendicular to the first control conductors (21.1).

9. Magnetic head according to Claim 8, **characterized in that** the first and second induction conductors (11.1, 11.2) intersect in a region (35) of parallelepipedal shape and that the control conductors are located outside this region, the first control conductors being parallel to a first side of the parallelepipedal shape and the second control conductors being parallel to a second side of the parallelepipedal shape which is not parallel to the first side.

10. Magnetic head according to Claim 9, **characterized in that** the first control conductors are distributed on each side of the region (35) and that the second conductors are distributed on each side of the region (35).
